# EUROPEAN PATENT SPECIFICATION

(11) **EP 4 194 276 B1**
(45) Date of publication and mention of the grant of the patent: **02.07.2025**
(21) Application number: 22212227.7
(22) Date of filing: 08.12.2022
(51) Int. Cl.: B60R 13/08, B62D 1/16, F16J 3/04

(54) **TRUCK COMPRISING A MOULDED SEALING DEVICE, AND METHOD FOR MANUFACTURING THE MOULDED SEALING DEVICE**
LASTKRAFTWAGEN MIT EINER FORMDICHTUNGSVORRICHTUNG UND VERFAHREN ZUR HERSTELLUNG DER FORMDICHTUNGSVORRICHTUNG
CAMION COMPRENANT UN DISPOSITIF D'ÉTANCHÉITÉ MOULÉ ET PROCÉDÉ DE FABRICATION DU DISPOSITIF D'ÉTANCHÉITÉ MOULÉ

(30) Priority: 08.12.2021 NL 2030072
(43) Date of publication of application: 14.06.2023
(73) Proprietor: DAF Trucks N.V., 5643 TW Eindhoven (NL)
(72) Inventor: KAMPS, Tom, 5643 TW Eindhoven (NL)
(74) Representative: V.O.

(56) References cited:
- EP-A1- 2 842 832
- EP-A1- 3 750 780
- JP-A- 2000 052 360
- JP-A- 2012 126 296

## Description

The invention relates to a truck comprising a steering shaft mounted between a cabin and a steering system of the truck, and extending through an opening in a cabin floor of the cabin, wherein the cabin is tiltable relative to the steering system between a drive position, in which the steering shaft is substantially perpendicular to a driving direction of the truck, and a service position, in which the steering shaft is substantially in the driving direction of the truck, wherein the truck comprises a moulded sealing device for sealing the opening of the cabin floor. The invention further relates to a method for manufacturing the moulded sealing device described herein.

To control environmental conditions and prevent contamination of the interior of a vehicle cabin, such as a truck cabin, openings in the cabin wall can be sealed to prevent exposure of the interior of the cabin to unwanted ingress of e.g. hot or cold air, water, dirt or oil and noise reduction. As such, a sealed compartment can be provided in which environmental conditions for a driver and passengers can be controlled. For example, EP3750780 describes a sealing device for sealing a fixed cabin, e.g. of a passenger car.

In some vehicles however, cabin suspension may allow movement of the cabin relative to e.g. the steering system and chassis of the vehicle, to improve driver comfort. Specifically in trucks, where the engine is located below the cabin, (i.e. cab over engine type of trucks) the entire cabin is tiltable to a service position relative to the chassis, in which the cabin floor may be oriented under an angle, to provide access to the engine compartment. In such conditions, a seal around a steering shaft extending from the cabin to the steering system through a cabin floor opening should be suitable to accommodate for these relative movements.

JP2012126296 describes a truck with a tiltable cabin, with a sealing device that only covers the cabin floor opening in the non-tilted state of the cabin. Hence, in the tilted state in which the opening is not covered, set air and temperature conditions within the cabin may be lost and/or the cabin interior may be contaminated by entering water, dirt or oil.

Other known sealing devices comprise a bellow type sleeve that can extend or contract, to accommodate for movements along the longitudinal axis of the steering shaft, and for relatively small displacements in other directions. However, these sealing devices may not be suitable for accommodating a tilting position of a cabin, without requiring a relatively large building volume below the cabin.

It is a challenge to design a sealing device that addresses these and other drawbacks.

### SUMMARY

In summary, the present invention provides a truck comprising a steering shaft mounted between a cabin and a steering system of the truck, and extending through an opening in a cabin floor of the cabin, wherein the cabin is tiltable relative to the steering system between a drive position, in which the steering shaft is substantially perpendicular to a driving direction of the truck, and a service position, in which the steering shaft is substantially in the driving direction of the truck, wherein the truck comprises a moulded sealing device for sealing the opening of the cabin floor. The sealing device comprises a cabin connector, a shaft connector, and an extendible sleeve. The cabin connector comprises a mounting surface circumferentially connecting the sealing device to the cabin floor around the opening. The shaft connector comprises a cylindrical inner surface connecting with an outer surface of the steering shaft. The extendible sleeve extends radially between the shaft connector and the cabin connector and is folded in a fold pattern, wherein the extendible sleeve is extendible from a neutral position. At least the extendible sleeve is moulded from an elastically deformable material. In the neutral position, the fold pattern comprises first fold flanks oriented substantially normal to the mounting surface, and second fold flanks oriented substantially coaxial with a centreline of the cylindrical inner surface. In the neutral position, the centreline is at an angle to the mounting surface, thereby providing at least one of the first or second fold flanks with a negative draft angle for releasing from a corresponding mould.

Accordingly, a sealing device is provided which is optimized to seal an opening in a cabin floor while maximizing the range of motion of a steering shaft extending through the opening and minimizing the building volume of the sealing device. Thus, the sealing device is particularly suitable for the truck with a tiltable cabin and in which the available space between cabin and engine compartment is limited. The sealing device provides a compact solution for accommodating relatively large movements of the steering shaft relative to the cabin floor, e.g. when the cabin is tilted forward to provide access to the engine compartment.

In some embodiments, the extendible sleeve is arranged for allowing a tilting movement of the shaft connector relative to the cabin connector, from the neutral position, between the drive position and the service position. As such, the sealing device is suitable for implementation in the truck with a tiltable cabin, e.g. for accessing an engine compartment. In further variants of these embodiments, the tilting movement is at least 60 degrees, to provide a sufficiently large angle between the cabin floor and the chassis for accessing the engine compartment.

In some embodiments, the extendible sleeve is elongated, comprising a long side and a short side in plane of the mounting surface, thereby allowing a movement of the shaft connector along the long side, to accommodate a tilting movement of the steering shaft. The extendible sleeve preferably comprises a small fold radius along the long side and a large fold radius along the short side. As such, movements of the shaft connector relative to the cabin connector, e.g. caused by a translation or tilting of a steering shaft mounted in the shaft connector, can be facilitated along the long side by increasing the pliability of the extendible sleeve across the short side, while movements of the shaft connector along the short side can be constrained by decreasing the pliability of the extendible sleeve across the long side.

In other or further embodiments, at least the first fold flanks of the fold pattern protrude through the plane of the mounting surface, in the neutral position. As a result, the distance between the mounting surface and the shaft connector can be decreased to provide a more compact sealing device, while accommodating relatively large movements of the steering shaft.

In yet other or further embodiments, the first fold flanks are normal to the mounting surface in a range between -10 and 10 degrees, in the neutral position. As such, the neutral position of the sealing device can be optimized in dependence of a neutral angle of the steering shaft relative to the cabin floor. This allows further maximizing the range of motion of the sealing device while minimizing the building volume.

In some embodiments, the second fold flanks are coaxial with the centreline in a range between -5 and 5 degrees, in the neutral position. This may further maximize the range of motion of the sealing device while minimizing the building volume, by optimizing the neutral position of the sealing device.

To provide an optimal ratio between range of motion and building volume, the angle between the centreline and the mounting surface may, in the neutral position, be in a range between 60 and 80 degrees.

In other or further embodiments, the shaft connector comprises a bearing element arranged for allowing a rotation of the steering shaft around a longitudinal axis of the steering shaft relative to the shaft connector, to minimize a rotation of the sealing device caused by a rotation of the steering shaft around its centreline.

In some embodiments, the elastically deformable material is a rubber material, to seal the opening while providing a relatively high degree of flexibility during manufacturing, e.g. for releasing from a mould with a negative draft angle, flexibility during use, e.g. for facilitating movement of the steering shaft relative to the cabin floor, and high durability, e.g. for extending the lifespan of the sealing device under thermal and mechanical loading. In further variants of these embodiments, the rubber material is an ethylene propylene diene monomer, for its good sealing, flexibility, and durability properties suitable for addressing the above example challenges.

In some embodiments, a distance between the cabin connector and the shaft connector is smaller than 100 millimeter. In this way, the sealing device has a relatively small building height compared to conventional sealing devices, so that it is suitable for implementation in compact volumes, e.g. between a cabin floor and an engine compartment, while accommodating large movements of the steering shaft.

Other aspects of the inventions relate to a truck, comprising the sealing device as described herein. In some embodiments, the truck further comprises a steering system, and a steering shaft mounted between a cabin and the steering system and extending through an opening in a cabin floor, wherein the cabin is tiltable relative to the steering system between a drive position, in which the steering shaft is substantially perpendicular to a driving direction of the truck, and a service position, in which the steering shaft is substantially in the driving direction of the truck.

Yet other aspects of the invention pertain to a method for manufacturing the sealing device of claim 1. The method comprises providing one or more first moulds, arranged for defining a first mould surface; providing one or more second moulds, arranged for defining a second mould surface, at an offset to the first mould surface; casting an elastically deformable material between the first and second mould surfaces; curing the elastically deformable material, to form the sealing device; and separating the one or more first moulds from the one or more second moulds. At least one of the first or second mould surface comprises a negative draft angle.

### BRIEF DESCRIPTION OF THE DRAWINGS

The invention will be further elucidated in the figures:
FIG 1 illustrates a section view of an embodiment of a sealing device;
FIG 2 provides an isometric view of other or further embodiments of the sealing device;
FIGs 3A-B provide section views of the embodiment shown in FIG 2;
FIG 4 illustrates a section view of other or further embodiments of the sealing device;
FIG 5 illustrates a truck comprising the sealing device described herein;
FIG 6 represents a method for manufacturing the sealing device described herein.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

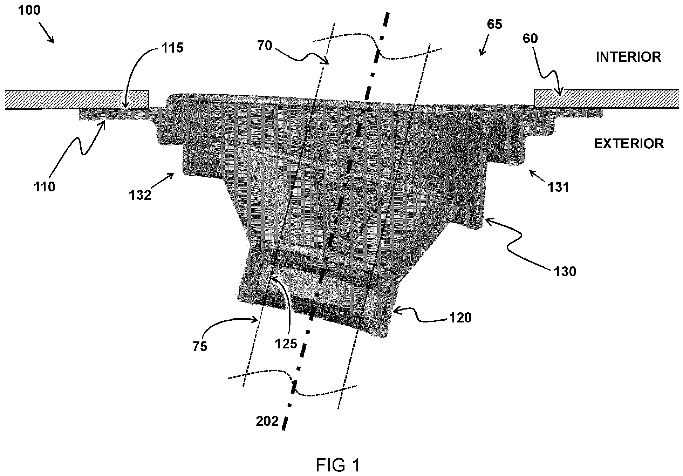

FIG 1 illustrates a moulded sealing device 100 for sealing an opening 65 in a cabin floor 60 of a truck. The opening 65 can for example be a hole, slot or cut out in the cabin floor 60, e.g. having a circular, elongate, or any other geometry, for allowing a component of the truck, e.g. a steering shaft 70, to extend between an interior and an exterior side of the cabin floor 60 while moving in plane of the cabin floor 60.

The sealing device 100 comprises a cabin connector 110, e.g. a connector arranged for connecting with the cabin floor 60 without obstructing passage of the steering shaft 70 through the opening 65 in the cabin floor 60. The cabin connector 110 comprises a mounting surface 115 arranged for circumferentially connecting the sealing device 100 to the cabin floor 60 around the opening 65, e.g. on an interior side of the cabin floor 60, or on an exterior side of the cabin floor 60 as shown in FIG 1. The cabin connector 110 can be connected to the cabin floor 60 by any suitable fasting means, such as screws, bolts and nuts, rivets, plugs, or by a snap-fit or press-fit connection. In dependence of the size and geometry of the cabin connector 110 relative to the size and geometry of the opening 65, the effective clearance for passage of the steering shaft 70 may be defined by the opening 65 or by an inner circumference of the cabin connector 110, or by a combination thereof.

The sealing device 100 further comprises a shaft connector 120, which comprises a cylindrical inner surface 125 arranged for connecting with an outer surface 75 of the steering shaft 70. The cylindrical inner surface 125 can for example be arranged for constraining translations of the shaft connector 120 relative to the steering shaft 70 along the axial direction of the steering shaft 70 and along the radial direction of the steering shaft 70, and for constraining rotations of the shaft connector 120 relative to the steering shaft 70 around any transverse direction perpendicular to the axial direction of the steering shaft 70, preferably without constraining a rotation of the shaft connector 120 relative to the steering shaft 70 around the axial direction. The cylindrical inner surface 125 can for example be part of a bearing mechanism, e.g. comprising planar bearings, roller bearings, needle bearings or ball bearings, arranged for exclusively allowing a rotation of the steering shaft 70 around its centreline 202, to minimize a rotation of the sealing device 100 caused by a rotation of the steering shaft 70 around its centerline 202.

The moulded sealing device 100 further comprises an extendible sleeve 130, extending radially between the shaft connector 120 and the cabin connector 110. The extendible sleeve 130 is folded in a fold pattern, e.g. comprising a plurality of ring shaped folds or creases between the shaft connector 120 and the cabin connector 110. The extendible sleeve 130 is extendible from the neutral position illustrated in FIG 1. In the neutral position, the fold pattern comprises first fold flanks 131 oriented substantially normal to the mounting surface 115, and second fold flanks 132 oriented substantially coaxial with the centreline 202.

This may provide a particularly flexible sealing device 100, e.g. for accommodating relatively large movements in different directions of the steering shaft 70 with respect to the cabin floor 60, without requiring a large building volume of the sealing device 100 in neutral position. In the sealing device 100 described herein, the shaft connector 120 can for example translate relative to the cabin connector 110 in a direction along the centreline 202, e.g. to accommodate axial displacements of the steering shaft 70 relative to the cabin floor 60, and in a direction transverse to the centreline 202, e.g. to accommodate lateral displacements of the steering shaft 70 relative to the cabin floor 60. Additionally, the shaft connector 120 can for example rotate relative to the cabin connector 110 around a direction transverse to the centreline 202, e.g. to accommodate relatively large tilting movements of the steering shaft 70 relative to the cabin floor 60, for example tilting movements of at least 60 degrees. As such, the sealing device 100 can be suitable for accommodating translations and rotations of the steering shaft 70 relative to the cabin floor 60 during driving conditions, e.g. caused by movement of a suspended cabin relative to a chassis mounted steering mechanism, and during service conditions, e.g. when the cabin is tilted forward relative to the chassis to provide access to the engine compartment.

As shown in FIG 1, in the neutral position, the centreline 202 of the cylindrical inner surface 125 of the shaft connector 120 is at an angle to the mounting surface 115 of the cabin connector 110. Accordingly, at least one of the first fold flanks 131 or second fold flanks 132 of the fold pattern of the extendible sleeve 130 is provided with a negative draft angle for releasing from a corresponding mould. In some embodiments of the invention, at least one of the first fold flanks 131 is at a zero or positive draft angle, and at least one of the second fold flanks 132 is at a negative draft angle. When implementing a positive draft angle, the angle of the surface of the first or second fold flanks 131, 132, with respect to the direction of pull, is more than zero. For a positive draft angle, a corresponding mould typically has a taper with a wider base outside the casted material extending to a narrower tip inside the casted material. Conversely, when implementing a negative draft angle, the angle of the surface of the first or second fold flanks 131, 132, with respect to the direction of pull, is less than zero. A corresponding mould for a negative draft angle may have a taper with a narrower base outside the casted material extending to a wider tip inside the casted material. As such, releasing a cast from a mould with a negative draft angle may be challenging, as the casted material is locked inside the mould.

To facilitate releasing of the sealing device 100 from the corresponding mould(s) due to the negative draft angle, at least the extendible sleeve 130 is moulded from an elastically deformable material, e.g. a hyperelastic material having an elasticity of at least 200%. In this way, the extendible sleeve 130 can be elastically deformed to release the sealing device 100 from the mould(s). By being moulded from an elastically deformable, e.g. hyperelastic, material, the flexibility of the sealing device 100 during operating conditions, e.g. accommodating movement of the shaft connector 120 relative to the cabin connector 110, can be improved, since the fold pattern of the extendible sleeve 130 may be more pliable. Preferably, besides providing flexibility, the material of the extendible sleeve 130 may also provide a water and dirt proof seal between the exterior and interior side of the cabin floor 60. Durability of the sealing properties of the sealing device 100 in terms of thermal and mechanical loading and/or fatigue may also be taken into account. For example, the sealing device 100 may be mounted in or near a high temperature area, such as an engine compartment, while accommodating cyclic movement of the shaft connector relative to the cabin connector. Preferred materials for the extendible sleeve 130 for example include rubber materials, more preferably ethylene propylene diene monomer (EPDM) rubbers, or other elastomers such as silicone rubber, to seal the opening 65 in the cabin floor 60 while providing a relatively high degree of flexibility for manufacturability and use, as well as high durability.

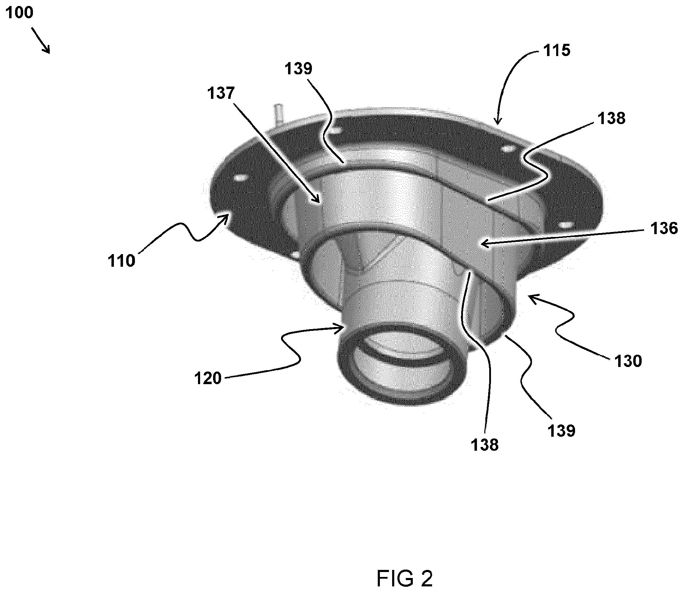

FIG 2 provides an isometric view of other or further embodiments of the sealing device 100. In plane of the mounting surface 115, the extendible sleeve 130 is elongated, comprising a long side 136 and a short side 137. As a result, the extendible sleeve can allow a movement of the shaft connector 120 relative to the cabin connector 110 along the long side 136, e.g. caused by a translation or tilting of a steering shaft mounted in the shaft connector 70. The extendible sleeve 130 comprises a small fold radius 138 along the long side 136 and a large fold radius 139 along the short side 137. The small fold radius 138 e.g. is a radius between 1 and 5 millimeter, preferably between 1 and 3 millimeter, and may have a constant radius of curvature along the long side 136, e.g. with tapering ends towards the short side 137. The large fold radius 139 e.g. is a radius between 3 and 10 millimeter, preferably between 5 and 8 millimeter, for example with a constant radius of curvature along the short side 137, and tapering ends towards the long side 136.

The large fold radius 139 can facilitate movements of the shaft connector 120 along the long side 136, e.g. a rotation and/or translation, by increasing the pliability of the extendible sleeve 130 across the short side 137. Conversely, by having a small fold radius 138 along the long side 136, the pliability of the extendible sleeve 130 across the long side 136 can be decreased, to constrain movements of the shaft connector 120 along the short side 136.

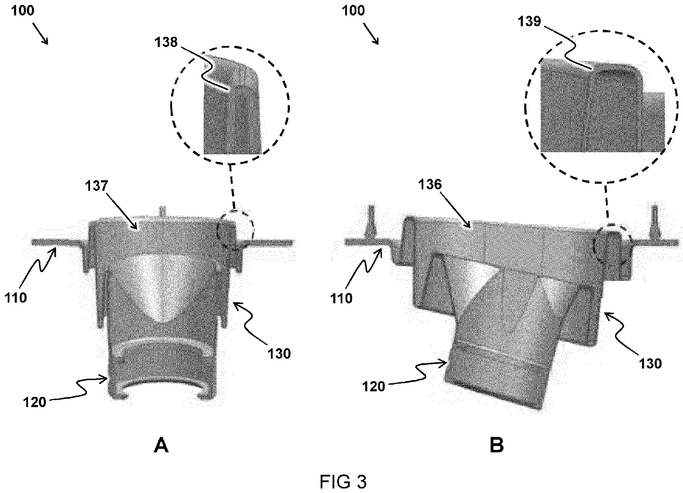

FIGs 3A and 3B provide section views of the embodiments illustrated in FIG 2 as described above. FIG 3A provides a section view from a direction perpendicular to a short side 137 of the extendible sleeve 130, and a detailed view illustrating that the extendible sleeve 130 comprises a small fold radius 138 along the long sides. Accordingly, movement of the shaft connector 120 relative to the cabin connector 110 may be limited, e.g. reduced in range of motion and/or flexibility, in a direction parallel to the short side 137.

FIG 3B provides a section view from a direction perpendicular to a long side 136 of the extendible sleeve 130. A detailed view illustrates that extendible sleeve 130 comprising a large fold radius 139 along the short sides. A large fold radius 139 can e.g. be implemented along all folds parallel to each short side, to maximize pliability of the extendible sleeve 130 in a direction parallel to the long side 136. Alternatively, a large fold radius 139 can be implemented only along inner folds, e.g. adjacent to the shaft connector 120, or only along outer folds, e.g. adjacent to the cabin connector 110, along other folds in between the inner and outer folds, or any combination thereof, to adjust the pliability of the extendible sleeve 130 in the direction parallel to the long side 136, and corresponding movement of the shaft connector 120 relative to the cabin connector 110.

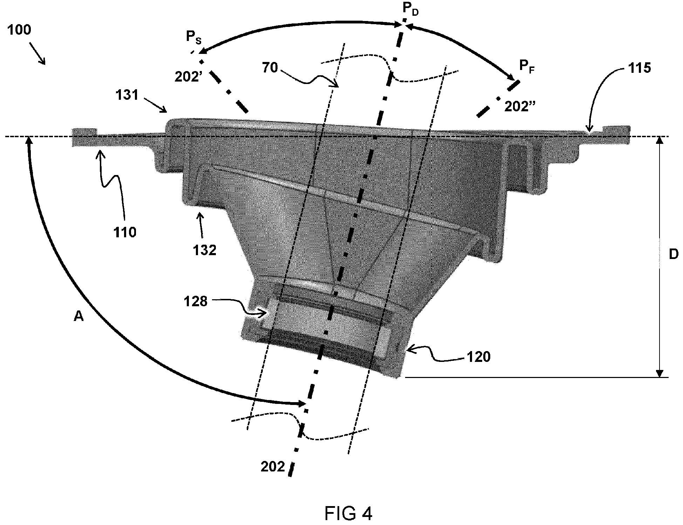

FIG 4 illustrates a section view of other or further embodiments of the sealing device 100 in the neutral position. The extendible sleeve 130 is arranged for allowing a tilting movement of the shaft connector 120 relative to the cabin connector 110, between a drive position P_{D} and a service position P_{S}. In the neutral position of the sealing device 100, the centreline 202 of the shaft connector 120 is oriented in the drive position P_{D}. From the drive position P_{D}, the shaft connector 120 can make a tilting movement towards a service position P_{S}, in which e.g. the cabin is tilted relative to the chassis to provide access to the engine compartment. In the service position P_{S}, the shaft connector 120 may be tilted relative to the mounting surface 115, indicated by centreline 202' corresponding to the service position P_{S} which is at an angle to centreline 202 corresponding to the drive position P_{D}. As such, the shaft connector 120 can be tilted from a positive orientation relative to the mounting surface 115, e.g. a forward angle, to a negative orientation relative to the mounting surface 115, e.g. a rearward angle. Preferably, the tilting movement between the drive position P_{D} and the service position P_{S} is at least 60 degrees, for example between 60 and 80 degrees, e.g. to provide a sufficiently large angle between the cabin floor and the chassis for accessing the engine compartment.

Besides a movement towards service position P_{S}, the shaft connector 120 can also make a tilting movement towards front position P_{F}, in which the shaft connector 120 can be at an angle relative to the mounting plane 115 indicated in FIG 4 by centreline 202", e.g. for accommodating movements of the steering shaft 70 caused by suspension related movements of the cabin relative to the chassis. These movements may be relatively small compared to the movement between the drive position P_{D} and the service position P_{S}.

As illustrated in FIG 4, in the neutral position of the sealing device 100, the first fold flanks 131 of the fold pattern protrude through the plane of the mounting surface 115. This can decrease the distance D between the mounting surface 115 and the shaft connector 120, while accommodating relatively large movements of the steering shaft 70. The first fold flanks 131 may be normal to the mounting surface 115 in a range between -10 and 10 degrees. As shown in FIG 4, the top edge of the first fold flanks 131 is at a slight angle relative to the mounting surface 115. Accordingly, the neutral position of the sealing device 100 can be optimized in dependence of a neutral angle of the steering shaft 70 relative to the cabin floor, e.g. to provide a maximum range of motion towards the service position P_{S} and the forward position P_{F}, with a minimum building volume, defined by the distance D between the mounting surface 115 and the shaft connector 120. For similar reasons, the second fold flanks 132 may be coaxial with the centreline 202 in a range between -5 and 5 degrees.

Preferably, the angle A between the centreline 202 and the mounting surface 115 is in a range between 60 and 80 degrees in the neutral position of the sealing device 100, to provide an optimal ratio between range of motion and building volume.

FIG 4 illustrates that the shaft connector 120 comprises a bearing element 128, e.g. a planar bearing, a ball bearing, a roller bearing, or a needle bearing. The bearing element 128 is arranged for allowing a rotation of the steering shaft 70 around centreline 202, corresponding with the longitudinal axis 202 of the steering shaft 70, relative to the shaft connector 120.

Preferably, in the neutral position of the sealing device 100, a distance D between the cabin connector 110 and the shaft connector 120 is smaller than 100 millimeter. For example, as shown in FIG 4, a distance D normal to the mounting surface 115, between the mounting surface 115 and a farthest edge of the shaft connector 120, is smaller than 100 millimeter, preferably smaller than 90 millimeter. In this way, the sealing device 100 has a relatively small building height compared to conventional sealing devices, so that it is suitable for implementation in compact volumes, e.g. between a cabin floor and an engine compartment, while accommodating large movements of the steering shaft 70.

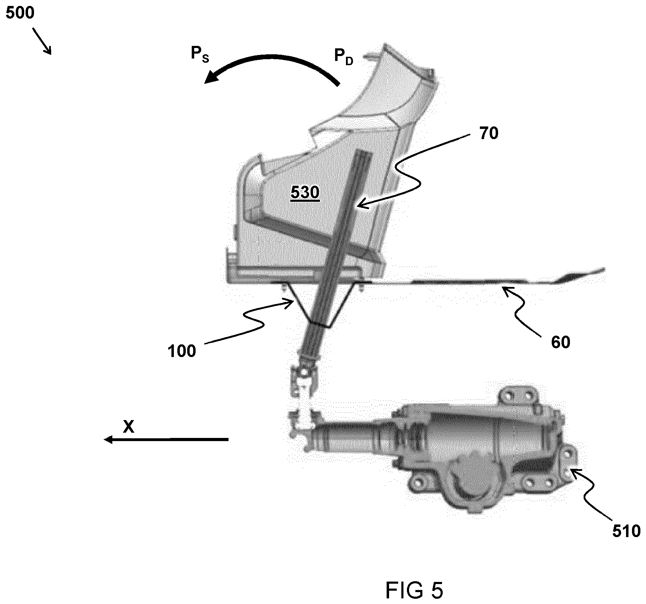

FIG 5 illustrates a truck 500 comprising the sealing device 100 described herein. As shown, the truck 500 may for example comprise a steering system 510, e.g. arranged for steering front wheels of the truck 500. The truck 500 may further comprise a steering shaft 70 mounted between the cabin 530 and the steering system 510. The steering shaft may extend through an opening in the cabin floor 60. As indicated in FIG 5, the cabin 530 is tiltable relative to the steering system 510 between a drive position P_{D} and a service position P_{S}. In the drive position P_{D} the steering shaft 70 may be substantially perpendicular to a driving direction X of the truck 500. For example, the centreline of the steering shaft may be at an angle between 60 and 90 degrees to the driving direction X. In the service position P_{S} the steering shaft 70 may be substantially in the driving direction X of the truck 500, e.g. the steering shaft 70 may have a centreline at an angle between 30 and 70 degrees relative to the driving direction X.

By comprising a sealing device 100 as described herein, the opening in the cabin floor 60, through which the steering shaft 70 extends, can be sealed e.g. against noise and unwanted ingress of water, dirt, oil or air, while accommodating movements of the steering shaft 70 relative to the cabin floor 60, during driving conditions and during service of the truck 500, when the cabin 530 is tilted forward to the service position P_{S}.

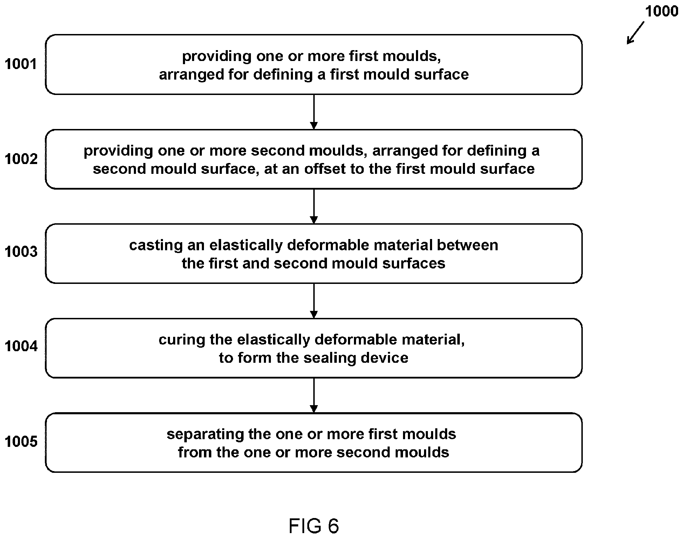

FIG 6 represents a method 1000 for manufacturing the moulded sealing device 100 described herein, e.g. by injection moulding or die casting. The method 1000 comprises step 1001 of providing one or more first moulds, arranged for defining a first mould surface. In step 1002, the method 1000 comprises providing one or more second moulds, arranged for defining a second mould surface, at an offset to the first mould surface. Step 1003 of the method 1000 comprises casting an elastically deformable material between the first and second mould surfaces. In step 1004, the method 1000 comprises curing the elastically deformable material, to form the sealing device. Step 1005 of the method 1000 comprises separating the one or more first moulds from the one or more second moulds. At least one of the first or second mould surface comprises a negative draft angle. In this way, a sealing device 100 can be provided with an extendible sleeve which, in neutral position, is optimized to maximize range of motion of the shaft connector relative to the cabin connector while minimizing the building volume of the sealing device. Thus, the resulting sealing device 100 may e.g. be suitable for accommodating relatively large movements of a steering shaft relative to a cabin floor of a truck with a tiltable cabin, in which truck the available space between cabin and engine compartment is limited.

It is thus believed that the operation and construction of the present invention will be apparent from the foregoing description and drawings appended thereto. For the purpose of clarity and a concise description features are described herein as part of the same or separate embodiments, however, it will be appreciated that the scope of the invention may include embodiments having combinations of all or some of the features described.

The invention applies not only to automotive applications where the sealing device is used for sealing an opening of a cabin floor, but also to other technical, agricultural or industrial applications where a sealing device is used. It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck (500), comprising a steering shaft (70) mounted between a cabin (530) and a steering system (510) of the truck, and extending through an opening (65) in a cabin floor (60) of the cabin, wherein the cabin is tiltable relative to the steering system between a drive position (P_{D}), in which the steering shaft (70) is substantially perpendicular to a driving direction (X) of the truck, and a service position (P_{S}), in which the steering shaft (70) is substantially in the driving direction (X) of the truck, wherein the truck comprises a moulded sealing device (100) for sealing the opening (65) in the cabin floor (60), wherein the sealing device (100) comprises:
- a cabin connector (110), comprising a mounting surface (115) circumferentially connecting the sealing device to the cabin floor (60) around the opening (65);
- a shaft connector (120), comprising a cylindrical inner surface (125) connecting with an outer surface (75) of the steering shaft (70); and
- an extendible sleeve (130), extending radially between the shaft connector (120) and the cabin connector (110) and folded in a fold pattern, wherein the extendible sleeve (130) is extendible from a neutral position;
wherein at least the extendible sleeve (130) is moulded from an elastically deformable material;
wherein, in the neutral position, the fold pattern comprises first fold flanks (131) oriented substantially normal to the mounting surface (115), and second fold flanks (132) oriented substantially coaxial with a centreline (202) of the cylindrical inner surface (125); and
wherein, in the neutral position, the centreline (202) is at an angle to the mounting surface (115), thereby providing at least one of the first or second fold flanks (131, 132) with a negative draft angle for releasing from a corresponding mould, wherein,
from the neutral position, the extendible sleeve (130) is arranged for allowing a tilting movement of the shaft connector (120) relative to the cabin connector (110), between the drive position (P_{D}) and the service position (P_{S}), while the opening (65) in the cabin floor (60) is sealed.

2. The truck (500) according to claim 1, wherein the tilting movement is at least 60 degrees.

3. The truck (500) according to any preceding claim, wherein, in plane of the mounting surface (115), the extendible sleeve (130) is elongated, comprising a long side (136) and a short side (137), thereby allowing a movement of the shaft connector (120) along the long side (136), and wherein the extendible sleeve (130) comprises a small fold radius (138) along the long side (136) and a large fold radius (139) along the short side (137).

4. The truck (500) according to any preceding claim, wherein, in the neutral position, at least the first fold flanks (131) of the fold pattern protrude through the plane of the mounting surface (115).

5. The truck (500) according to any preceding claim, wherein, in the neutral position, the first fold flanks (131) are normal to the mounting surface (115) in a range between -10 and 10 degrees.

6. The truck (500) according to any preceding claim, wherein, in the neutral position, the second fold flanks (132) are coaxial with the centreline (202) in a range between -5 and 5 degrees.

7. The truck (500) according to any preceding claim, wherein, in the neutral position, the angle (A) between the centreline (202) and the mounting surface (115) is in a range between 60 and 80 degrees.

8. The truck (500) according to any preceding claim, wherein the shaft connector (120) comprises a bearing element (128) arranged for allowing a rotation of the steering shaft (70) around a longitudinal axis (202) of the steering shaft (70) relative to the shaft connector (120).

9. The truck (500) according to any preceding claim, wherein the elastically deformable material is a rubber material.

10. The truck (500) according to claim 9, wherein the rubber material is an ethylene propylene diene monomer.

11. The truck (500) according to any preceding claim, wherein a distance (D) between the cabin connector (110) and the shaft connector (120) is smaller than 100 millimeter.

12. A method (1000) for manufacturing the sealing device (100) of claim 1, the method comprising:
- providing (1001) one or more first moulds, arranged for defining a first mould surface;
- providing (1002) one or more second moulds, arranged for defining a second mould surface, at an offset to the first mould surface;
- casting (1003) an elastically deformable material between the first and second mould surfaces;
- curing (1004) the elastically deformable material, to form the sealing device; and
- separating (1005) the one or more first moulds from the one or more second moulds;
wherein at least one of the first or second mould surface comprises a negative draft angle.

## Patentansprüche

1. Lastkraftwagen (500), mit einer Lenkwelle (70), die zwischen einer Kabine (530) und einem Lenksystem (510) des Lastkraftwagens montiert ist und sich durch eine Öffnung (65) in einem Kabinenboden (60) der Kabine erstreckt, wobei die Kabine relativ zum Lenksystem zwischen einer Fahrposition (P_{D} ), in der sich die Lenkwelle (70) im Wesentlichen senkrecht zu einer Fahrtrichtung (X) des Lastkraftwagens befindet, und einer Serviceposition (P_{S} ), in der die Lenkwelle (70) im Wesentlichen in der Fahrtrichtung (X) des Lastkraftwagens positioniert ist, neigbar ist, wobei der Lastkraftwagen eine Formdichtungsvorrichtung (100) zum Abdichten der Öffnung (65) im Kabinenboden (60) aufweist, wobei die Dichtungsvorrichtung (100) aufweist:
- einen Kabinenverbinder (110) mit einer Montagefläche (115), die die Dichtungsvorrichtung mit dem Kabinenboden (60) um die Öffnung (65) umlaufend verbindet;
- einen Wellenverbinder (120) mit einer zylindrische Innenfläche (125), die eine Verbindung mit einer Außenfläche (75) der Lenkwelle (70) herstellt; und
- eine ausfahrbare Hülse (130), die sich radial zwischen dem Wellenverbinder (120) und dem Kabinenverbinder (110) erstreckt und in einem Faltungsmuster gefaltet, wobei die ausfahrbare Hülse (130) aus einer neutralen Position ausfahrbar ist;
wobei zumindest die ausfahrbare Hülse (130) aus einem elastisch verformbaren Material geformt ist;
wobei das Faltungsmuster in der Neutralposition im Wesentlichen normal zur Montagefläche (115) ausgerichtete erste Faltungsflanken (131) und im Wesentlichen koaxial zu einer Mittellinie (202) der zylindrischen Innenfläche (125) ausgerichtete zweite Faltungsflanken (132) aufweist; und
wobei sich in der Neutralposition die Mittellinie (202) in einem Winkel zur Montagefläche (115) befindet, wodurch wenigstens eine von der ersten oder zweiten Faltungsflanke (131, 132) mit einem negativen Aushebewinkel zum Lösen aus einer entsprechenden Form bereitgestellt ist, wobei, aus der Neutralposition, die ausfahrbare Hülse (130) so angeordnet ist, dass sie eine Neigungsbewegung des Wellenverbinders (120) relativ zum Kabinenverbinder (110) zwischen der Fahrposition (P_{D} ) und der Serviceposition (P_{S} ) gestattet, während die Öffnung (65) im Kabinenboden (60) abgedichtet ist.

2. Lastkraftwagen (500) nach Anspruch 1, wobei die Neigungsbewegung mindestens 60 Grad beträgt.

3. Lastkraftwagen(500) nach einem der vorhergehenden Ansprüche, wobei, in der Ebene der Montagefläche (115), die ausfahrbare Hülse (130) verlängert ist, mit einer langen Seite (136) und einer kurzen Seite (137), wodurch eine Bewegung des Wellenverbinders (120) entlang der langen Seite (136) ermöglicht wird, und wobei die ausfahrbare Hülse (130) einen kleinen Faltungsradius (138) entlang der langen Seite (136) und einen großen Faltungsradius (139) entlang der kurzen Seite (137) aufweist.

4. Lastkraftwagen (500) nach einem der vorhergehenden Ansprüche, wobei in der Neutralposition zumindest die ersten Faltungsflanken (131) des Faltungsmusters durch die Ebene der Montagefläche (115) vorstehen.

5. Lastkraftwagen (500) nach einem der vorhergehenden Ansprüche, wobei in der Neutralpostion die ersten Faltungsflanken (131) in einem Bereich zwischen -10 und 10 Grad normal zur Montagefläche (115) sind.

6. Lastkraftwagen (500) nach einem der vorhergehenden Ansprüche, wobei in der Neutralposition die zweiten Faltungsflanken (132) in einem Bereich zwischen -5 und 5 Grad koaxial zur Mittellinie (202) sind.

7. Lastkraftwagen (500) nach einem der vorhergehenden Ansprüche, wobei in der Neutralposition der Winkel (A) zwischen der Mittellinie (202) und der Montagefläche (115) in einem Bereich zwischen 60 und 80 Grad liegt.

8. Lastkraftwagen (500) nach einem der vorhergehenden Ansprüche, wobei der Wellenverbinder (120) ein Lagerelement (128) aufweist, dazu angeordnet, eine Drehung der Lenkwelle (70) um eine Längsachse (202) der Lenkwelle (70) relativ zum Wellenverbinder (120) zu erlauben.

9. Lastkraftwagen (500) nach einem der vorhergehenden Ansprüche, wobei das elastisch verformbare Material ein Gummimaterial ist.

10. Lastkraftwagen (500) nach Anspruch 9, wobei das Gummimaterial ein Ethylenpropylendienmonomer ist.

11. Lastkraftwagen (500) nach einem der vorhergehenden Ansprüche, wobei ein Abstand (D) zwischen dem Kabinenverbinder (110) und dem Wellenverbinder (120) kleiner als 100 Millimeter ist.

12. Verfahren (1000) zum Herstellen der Dichtungsvorrichtung (100) nach Anspruch 1, wobei das Verfahren umfasst:
- Bereitstellen (1001) einer oder mehrerer erster Formen, angeordnet zum Definieren einer ersten Formoberfläche;
- Bereitstellen (1002) einer oder mehrerer zweiter Formen, angeordnet zum Definieren einer zweiten Formoberfläche, mit einem Versatz zur ersten Formoberfläche;
- Gießen (1003) eines elastisch verformbaren Materials zwischen der ersten und zweiten Formoberfläche;
- Aushärten (1004) des elastisch verformbaren Materials, um die Dichtungsvorrichtung auszubilden; und
- Trennen (1005) der einen oder mehrerer erster Formen von der einen oder mehreren zweiten Formen;
wobei wenigstens eine von der ersten oder zweiten Formoberfläche einen negativen Aushebewinkel aufweist.

## Revendications

1. Camion (500), comprenant un arbre de direction (70) monté entre une cabine (530) et un système de direction (510) du camion, et s'étendant à travers une ouverture (65) dans un plancher de cabine (60) de la cabine, dans lequel la cabine est inclinable par rapport au système de direction entre une position de conduite (P_{D}), dans laquelle l'arbre de direction (70) est sensiblement perpendiculaire à la direction de conduite (X) du camion, et une position de service (P_{S}), dans laquelle l'arbre de direction (70) est sensiblement dans la direction de conduite (X) du camion, dans laquelle le camion comprend un dispositif de scellement moulé (100) pour sceller l'ouverture (65) dans le plancher de la cabine (60), dans laquelle le dispositif de scellement (100) comprend : - un connecteur de cabine (110), comprenant une surface de montage (115) reliant de manière circonférentielle le dispositif de scellement au plancher de la cabine (60) autour de l'ouverture (65) ;
- un connecteur d'arbre (120), comprenant une surface intérieure cylindrique (125) reliée à une surface extérieure (75) de l'arbre de direction (70) ; et
- un manchon extensible (130), s'étendant radialement entre le connecteur d'arbre (120) et le connecteur de cabine (110) et plié selon un schéma de pliage, dans lequel le manchon extensible (130) est extensible à partir d'une position neutre ;
dans lequel au moins le manchon extensible (130) est moulé dans un matériau élastiquement déformable ;
dans lequel, en position neutre, le schéma de pliage comprend des premiers flancs de pliage (131) orientés sensiblement normalement par rapport à la surface de montage (115), et des seconds flancs de pliage (132) orientés sensiblement coaxialement à une ligne médiane (202) de la surface intérieure cylindrique (125) ; et
dans lequel, en position neutre, la ligne médiane (202) fait un angle avec la surface de montage (115), fournissant ainsi à au moins l'un des premiers ou seconds flancs de pliage (131, 132) un angle de dépouille négatif pour se libérer d'un moule correspondant, dans lequel,
à partir de la position neutre, le manchon extensible (130) est conçu pour permettre un mouvement de basculement du connecteur d'arbre (120) par rapport au connecteur de cabine (110), entre la position d'entraînement (P_{D}) et la position de service (P_{S}), tandis que l'ouverture (65) dans le plancher de la cabine (60) est scellée.

2. Camion (500) selon la revendication 1, dans lequel le mouvement d'inclinaison est d'au moins 60 degrés.

3. Camion (500) selon l'une quelconque des revendications précédentes, dans lequel, dans le plan de la surface de montage (115), le manchon extensible (130) est allongé, comprenant un côté long (136) et un côté court (137), permettant ainsi un mouvement du connecteur d'arbre (120) le long du côté long (136), et dans lequel le manchon extensible (130) comprend un petit rayon de pliage (138) le long du côté long (136) et un grand rayon de pliage (139) le long du côté court (137).

4. Camion (500) selon l'une quelconque des revendications précédentes, dans lequel, en position neutre, au moins les premiers flancs de pliage (131) du schéma de pliage font saillie à travers le plan de la surface de montage (115).

5. Camion (500) selon l'une quelconque des revendications précédentes, dans lequel, en position neutre, les premiers flancs de pliage (131) sont normaux à la surface de montage (115) dans une plage comprise entre -10 et 10 degrés.

6. Camion (500) selon l'une quelconque des revendications précédentes, dans lequel, en position neutre, les seconds flancs de pliage (132) sont coaxiaux avec l'axe central (202) dans une plage comprise entre -5 et 5 degrés.

7. Camion (500) selon l'une quelconque des revendications précédentes, dans lequel, en position neutre, l'angle (A) entre l'axe central (202) et la surface de montage (115) est compris entre 60 et 80 degrés.

8. Camion (500) selon l'une quelconque des revendications précédentes, dans lequel le connecteur d'arbre (120) comprend un élément de roulement (128) conçu pour permettre une rotation de l'arbre de direction (70) autour d'un axe longitudinal (202) de l'arbre de direction (70) par rapport au connecteur d'arbre (120).

9. Camion (500) selon l'une quelconque des revendications précédentes, dans lequel le matériau élastiquement déformable est un matériau en caoutchouc.

10. Camion (500) selon la revendication 9, dans lequel le matériau en caoutchouc est un monomère d'éthylène-propylène-diène.

11. Camion (500) selon l'une quelconque des revendications précédentes, dans lequel une distance (D) entre le connecteur de cabine (110) et le connecteur d'arbre (120) est inférieure à 100 millimètres.

12. Procédé (1000) de fabrication du dispositif de scellement (100) de la revendication 1, comprenant :
- fournir (1001) un ou plusieurs premiers moules, disposés de manière à définir une première surface de moule ;
- fournir (1002) un ou plusieurs seconds moules, disposés de manière à définir une seconde surface de moule, décalée par rapport à la première surface de moule ;
- couler (1003) un matériau élastiquement déformable entre la première et la deuxième surface du moule ;
- durcir (1004) le matériau élastiquement déformable pour former le dispositif de scellement ; et
- séparer (1005) le ou les premiers moules du ou des seconds moules ; dans lequel au moins l'une de la première ou de la deuxième surface du moule présente un angle de dépouille négatif.
